# FASCICULE DE BREVET EUROPEEN

(11) **EP 1 289 371 B1**
(45) Date de publication et mention de la délivrance du brevet: **03.05.2006**
(21) Numéro de dépôt: 01945433.9
(22) Date de dépôt: 14.06.2001
(51) Int. Cl.: A21D 13/06, A23L 1/307, A21D 13/08, A21D 15/02, A21D 8/02

(54) **GATEAU CUIT SURGELE DIETETIQUE**
GEFRORENER DIÄTKUCHEN
DEEP-FROZEN DIETETIC CAKE

(30) Priorité: 14.06.2000 WO PCT/FR00/01641
(43) Date de publication de la demande: 12.03.2003
(73) Titulaire: CEPRODI-Compagnie Européenne de Produits Diététiques, 75008 Paris (FR)
(72) Inventeur: ALLOUCHE, Réginald, 75006 Paris (FR)
(74) Mandataire: Boulinguiez, Didier
(86) Numéro de dépôt international: PCT/FR2001/001852
(87) Numéro de publication internationale: WO 2001/095731

(56) Documents cités:
- EP-A- 0 768 043
- EP-A- 0 965 351
- EP-A- 1 106 069
- FR-A- 2 536 634
- FR-A- 2 589 680
- FR-A- 2 788 409

## Description

L'invention a pour objet un produit diététique qui se présente sous forme d'un gâteau sucré ou salé cuit surgelé.

Ce produit diététique se caractérise essentiellement par le fait qu'il est cuit et congelé, qu'il présente une teneur élevée en protéines et une teneur faible en glucides et en lipides. De façon générale, le pouvoir calorique de ce produit est compris entre 120 et 200 Kcal/100 g.

Les produits traditionnels du type gâteau sont réputés être des produits anti-régime car le plus souvent ils présentent une très haute teneur en lipides ainsi qu'une teneur élevée en farine, qui contient une proportion importante de glucides. Le pouvoir calorique de ces produits est encore accru lorsque les gâteaux sont sucrés puisque l'on adjoint dans ce cas une forte teneur en saccharose. A titre d'exemple, une formule conventionnelle de cake contient environ 13 g de lipides et 64 g de glucides pour 100 g de produit commercial. Toujours à titre d'exemple, un produit du type quiche lorraine contient environ 12.5 g de lipides et environ 18.5 g de glucides pour 100 g de produit commercial.

Or, de plus en plus, les consommateurs sont attentifs à leur apparence physique et ne veulent pas prendre de poids tout en continuant à manger en se faisant plaisir, c'est à dire en mangeant beaucoup, et des produits gustatifs. Ils sont donc de plus en plus conduits à se tourner vers de multiples régimes dits "minceurs" qui se caractérisent le plus généralement par un moindre apport calorique quotidien, obtenu par une moindre quantité d'aliments ingérés associée le plus souvent à une réduction de la teneur en lipides.

Malheureusement, ces régimes sont difficiles à observer sur une longue période et entraînent une perte de poids liée à une perte de masse musculaire. On observe alors un manque de tonicité et d'élasticité de la peau, une asthénie physique et intellectuelle, et les personnes suivant à la lettre ces régimes ne mangent pas à satiété et souffrent donc de la faim et de frustration.

Il apparaît donc un besoin pour des produits de régime qui, tout en étant hypocaloriques, n'entraînent pas les conséquences néfastes indiquées ci-dessus et qui permettent au consommateur de suivre un régime avec plaisir, c'est à dire qui lui permettent de manger à satiété et de perdre sa masse grasse, sans que ce soit au détriment de sa masse maigre.

Il serait par conséquent intéressant de pouvoir mettre sur le marché un produit du type gâteau, salé ou sucré, qui soit hyperprotéiné et en même temps hypocalorique. Cependant, cette nécessité d'avoir peu de lipides et peu de glucides dans un produit de ce type, qui doit également comporter une structure moelleuse et aérée, rend extrêmement difficile sa fabrication. Le document EP 0 768 043 décrit une composition nutritionnelle pour le régime des diabétiques qui permet une absorption contrôlée des glucides lors de la digestion. Il s'agit d'un produit hypocalorique diététique, mais qui n'est pas hyperprotéiné.

Ce n'est donc qu'au prix de longues recherches que le Demandeur est parvenu à mettre au point une formulation qui soit hyperprotéinée, hypocalorique et qui présente en même temps une texture acceptable, des caractéristiques organoleptiques très satisfaisantes, et qui soit cuite de façon homogène.

Ce produit est caractérisé par le fait qu'il contient, les pourcentages étant exprimés en poids sur le produit commercial, donc sur le produit obtenu après cuisson :
- une teneur en protéines (calculée en Nx 6.25) comprise entre 15 et 25 %, une teneur en glucides comprise entre 5 et 10 %, et une teneur en lipides entre 1 et 5 %.
- de préférence, une teneur en protéines comprise entre 15 et 22 %, une teneur en glucides entre 5 et 9%, et une teneur en lipides entre 1 et 4.5 %.
- plus préférentiellement encore, une teneur en protéines comprise entre 15 et 21%, une teneur en glucides entre 5.5 et 9 % et, une teneur en lipides entre 1.5 et 4.5 %.

La valeur calorique totale du produit se situe entre 120 et 200 Kcal/100 g, de préférence entre 120 et 180 Kcal/100 g, et plus préférentiellement encore entre 120 et 170 kcal/100 g.

Sa teneur en eau est d'autre part comprise entre 40 et 72 %, de préférence entre 40 et 70 %.

Le produit de type gâteau ainsi défini est également caractérisé par le fait que son indice chimique est supérieur à 100.

On rappelle qu'on entend par indice chimique d'une protéine le produit par 100 du plus petit des quotients obtenus en divisant, pour chacun des acides aminés essentiels, la quantité présente dans 100 g de cette protéine par la quantité correspondante présente dans 100 g de la protéine servant de référence, celle ci étant caractérisée par les teneurs suivantes rapportées à 100 g :
L isoleucine : 4 g
L leucine : 7 g
L lysine : 5.5 g
DL méthionine + L cystine : 3.5 g
L phénylalanine + L tyrosine : 6 g
L thréonine : 4 g
L tryptophane : 1 g
L valine : 5 g

Au cas où la formule se révèle déficitaire en acides aminés, on les rajoute en quantité suffisante pour que l'indice chimique soit supérieur à 100.

Les protéines utilisées pour la constitution du produit conforme à l'invention peuvent être d'origine animale ou végétale. On préfère utiliser des protéines laitières telles que protéine laitière totale, lactalbumine, lactosérum, concentrés protéiques laitiers contenant peu ou pas de lactose, protéines laitières ultrafiltrées, babeurre et babeurre ultrafiltré, ou protéines sériques délactosées thermocoagulées. Selon une réalisation préférentielle de l'invention, les protéines laitières sont présentes en une teneur comprise entre 9 et 18 g, de préférence entre 10 et 18 g, et plus préférentiellement entre 10 et 17.5 g en poids pour 100g de produit commercialisé. On peut également utiliser, à coté des protéines laitières, d'autres protéines comme notamment des protéines d'oeuf, de soja, de pois, de lupin.

Comme glucides, on peut utiliser des farines de blé, de mais, des polydextroses ou polyfructoses, des maltodextrines, des fécules, de pomme de terre notamment. De façon préférentielle, on utilise de la farine de blé, en une quantité comprise entre 0.5 et 6 g, de préférence entre 1 et 6 g et plus préférentiellement entre 1 et 5.5 g. De même, on utilise préférentiellement de la fécule de pomme de terre, en une quantité comprise entre 0.25 et 4 g, de préférence entre 0.25 et 3.75 g et plus préférentiellement entre 0.25 et 3.5 g pour 100 g de produit commercial.

Comme lipides, on peut utiliser notamment des poudres de fromage. On peut éventuellement incorporer des poudres de matières grasses végétales ou animales.

Le produit surgelé conforme à l'invention contient de préférence, pour 100 g de produit commercial, entre 2 et 8 g de poudre de blanc d' oeuf, préférentiellement entre 2.5 et 8 g et plus préférentiellement entre 3 et 8 g.

Il contient en outre, selon une réalisation préférentielle, les quantités étant également indiquées pour 100 g de produit commercial :
- de 0.2 à 1.5 g, de préférence de 0.25 à 1.25 g, et plus préférentiellement encore de 0.25 à 1.12 g de poudre à lever, sous forme par exemple de bicarbonate de sodium et de pyrophosphate, ou de levures de boulangerie ou de bière,
- de 0.01 à 0.15 g, de préférence de 0.01 à 0.12 g, et plus préférentiellement encore de 0.02 à 0.12 g d'épaississants, tels que les gommes de xanthane, de caroube, de carraghénane etc...

Bien entendu, le gâteau surgelé conforme à l'invention peut contenir d'autres ingrédients conventionnels comme des arômes, des poudres de légumes, de fruits, des acides aminés, des épices, des exhausteurs de goûts, des édulcorants intenses, des fibres solubles ou insolubles, des marquants aromatiques en poudre et/ou en liquide et/ou en morceaux.

Une formulation type de gâteau hyperprotéinique et hypercalorique selon l'invention est la suivante :
- protéines (N x 6,25) : 15 à 20 %
- glucides : 5 à 6 %
- lipides : 3 à 4 %
- Valeur calorique inférieure à 150 Kcal pour 100 g de produit commercial.

L'invention a également pour objet le procédé de préparation du produit surgelé conforme à l'invention, ce procédé comprenant les étapes suivantes :
- sélection des ingrédients, pesée et dosage, lesdits ingrédients étant pour la plupart sous forme de poudres,
- mélange d'une partie des agents foisonnants ou moussants, et d'une partie ou de la totalité des épaississants, puis hydratation,
- foisonnement du mélange ainsi obtenu,
- mélange et hydratation des autres ingrédients, qui se présentent pour la plupart sous forme de poudre, à raison le plus généralement de 100g de poudre pour 0.12 à 0.16 Litre, afin d'obtenir une pâte,
- incorporation du mélange foisonné avec la pâte, généralement à raison de 100 g du mélange foisonné pour 350 à 420g de la pâte,
- dosage individuel en coupelles,
- mise au repos de la pâte, pendant une durée comprise entre 15 minutes et 60 minutes, de préférence entre 20 minutes et 50 minutes, et plus préférentiellement encore pendant une durée proche de 30 minutes,
- cuisson statique en vapeur saturée constante, afin d'obtenir une température d'environ 70 à 85°C, et de préférence d'environ 75°C à coeur du produit,
- refroidissement,
- dorage infra rouge pendant une durée de 30 secondes à 90 secondes, de préférence de l'ordre de 60 secondes,
- conditionnement et surgélation.

L'invention pourra être mieux comprise à l'aide de l'exemple de réalisation qui suit, donné à titre purement illustratif.

### EXEMPLE : PREPARATION D'UN TOURTEAU AU FROMAGE

Une pâte hyperprotéinée hypocalorique a été préparée puis dosée dans des coupelles aluminium, à raison de 110 g pour chaque coupelle, le but étant d'obtenir après cuisson un petit tourteau solide de 110 g.

La composition a été la suivante :

### Mélange poudre base :

| **Ingrédients** | **%** |
|---|---|
| Arôme fromage | 2.69 |
| Bicarbonate de sodium | 0.93 |
| Pyrophosphate de sodium | 1.41 |
| Sel | 1.40 |
| Inuline RAFTILINE GR | 4.86 |
| Fécule de pomme de terre PREGEFLO PJ 30 | 2.70 |
| Farine de meule complète Lauriou | 7.66 |
| Protéines de lait PL 80 (Triballat) | 21.61 |
| Protéines de lait WPC 90 (Triballat) | 21.61 |
| Fromage emmenthal Type 5 (Proseca) | 27.01 |
| Blanc d'oeuf en poudre HG (Igreca) | 8.12 |
| TOTAL | 100 |

### Mélange poudre blanc d'oeuf:

| **Ingrédients** | **%** |
|---|---|
| Blanc d'oeuf en poudre HG (Igreca) | 97.656 |
| Gomme de xanthane RHODIGEL (Rhodia) | 2.344 |
| TOTAL | 100 |

### Procédé :

On pèse 66 g de mélange poudre blanc d'oeuf et on y ajoute 445 ml d'eau froide avant de battre cette préparation en neige.

On pèse 794 g de mélange poudre base et on y ajoute 1,18 L d'eau froide. On mélange jusqu'à obtenir une pâte sans grumeaux.

Cette pâte est alors mélangée en continu avec le blanc d'oeuf monté en neige.

On procède ensuite au dosage par coupelles de 110 g puis à la cuisson et au dorage.

### Cuisson :

Différents essais de cuisson ont été réalisés sur équipement industriel.

### 1^{er} essai de cuisson

La cuisson a été faite de façon traditionnelle à 180°C, sans contrôle de l'humidité. Malgré une expérimentation sur plusieurs temps de cuisson, il n'a jamais été possible d'obtenir une cuisson homogène de la pâte dans la coupelle.

On constate la formation rapide d'une croûte élastique en surface, puis cette croûte durcit et cuit mais empêche la cuisson de la pâte à l'intérieur, celle-ci restant donc liquide.

En augmentant le temps de cuisson, la croûte brûle, mais la pâte à l'intérieur ne cuit toujours pas.

De plus, avec ce mode de cuisson traditionnel, on observe une déshydratation de la pâte. Ainsi, avec un dosage de 110 g de pâte par coupelle, on récupère après cuisson environ 80 g de produit.

Ce mode de cuisson n'est donc pas satisfaisant.

### 2^{ème} essai de cuisson

La cuisson a eu lieu avec injection de vapeur régulière. C'est une cuisson à plus basse température, ce qui permet de moins agresser la pâte hyperprotéinée et hypocalorique.

Lors de la cuisson, la pâte monte dans la coupelle, comme un soufflé. A l'intérieur, la pâte est levée, présente des alvéoles de 2 à 3 mm environ mais elle n'est cuite. A l'extérieur, la pâte forme également une croûte. En fin de cuisson, le gâteau s'affaisse, ce qui démontre que la pâte intérieure n'est pas cuite correctement.

Cet essai montre cependant qu'il faut que la cuisson ait lieu en présence de vapeur. Mais avec l'injection de vapeur, si la pâte hyperprotéinée prend du volume à la cuisson, par contre la présence de la croûte indique un manque d'humidité et une température de cuisson trop élevée.

### 3^{ème} essai de cuisson

La cuisson a cette fois lieu en vapeur saturée constante, à plus basse température, de façon à obtenir une température d'environ 75°C à coeur du tourteau. Ce procédé de cuisson équivaut à une cuisson en étuve humide statique.

La cuisson a lieu durant 20 minutes, la température dans le four monte à environ 95°C et la température à coeur du tourteau monte à 70-85°C.

Le résultat obtenu est correct : on observe une cuisson uniforme du gâteau, les alvéoles de la pâte sont cuites et il n'y a pas de croûte en surface.

Selon les temps de repos de la pâte avant cuisson, on observe des aspects différents du tourteau :
- si l'on observe aucun repos entre le dosage de la pâte dans les coupelles et la cuisson, le gâteau cuit mais colle au bord de la coupelle.
   La présentation n'est donc pas esthétique et il est très difficile de démouler le gâteau au niveau du consommateur.
- Si l'on observe un repos d'environ 30 minutes entre le dosage en coupelles et la cuisson, le gâteau se rétracte légèrement si bien qu'il n'adhère pas au bord de la coupelle. Son aspect est beaucoup plus satisfaisant.
   C'est ce temps de repos qui est donc considéré, dans ces conditions, comme optimal.

En sortie du four, les produits sont mis à refroidir à température ambiante pendant environ 20 minutes, après quoi on procède au dorage des produits.

### Dorage :

### Essai de dorage n° 1

La cuisson en vapeur saturée ne colore pas le produit : celui-ci est donc de couleur crème en sortant de l'étape de cuisson en vapeur saturée. Des essais de dorage du tourteau à la surface sont donc réalisés.

Des essais de dorage ont tout d'abord été faits à la flamme directe (alimentation gaz), en jouant sur l'éloignement de la flamme par rapport au gâteau, de manière à ne pas brûler la coupelle aluminium et à ne pas griller le dessus du tourteau.

Ces essais conduisent cependant à un dorage de couleur noire et non jaune doré, ce qui n'est pas acceptable.

### Essai de dorage n° 2

Un appareil de dorage infra rouge est utilisé, la température d'émission de l'appareil étant de 1000°C environ.

La distance du produit vis à vis de la grille de dorage est un paramètre important : une distance de 15 cm ne conduit pas à un dorage satisfaisant. C'est à une distance d'environ 12.5 cm que le dorage s'effectue.

De même, le temps de dorage intervient pour l'obtention d'un produit d'aspect régulier, sans cratères et de surface lisse.

Avec un temps de dorage de 1 minute et 20 secondes, on obtient un dorage finalement foncé et une petite croûte en surface.

Un temps d'une minute apparaît comme étant le temps optimal : il n'y a pas de croûte et la couleur est dorée sans être brune. Pendant les 50 premières secondes, il n'y a pas de dorage apparent, mais des bulles apparaissent en surface. Entre 50 secondes et 60 secondes, le dorage a lieu rapidement et on obtient finalement un tourteau hyperprotéiné et hypocalorique d'aspect et de texture tout à fait satisfaisants, présentant d'excellentes propriétés organoleptiques.

## Revendications

1. Gâteau cuit surgelé, présentant une teneur en protéines (calculée en N x 6,25) comprise entre 15 et 25 %, une teneur en glucides comprise entre 5 et 10 %, une teneur en lipides comprise entre 1 et 5 %, et une teneur en eau de 40 à 72 %, ces pourcentages étant exprimés en poids par rapport au produit commercial.

2. Gâteau cuit surgelé selon la revendication 1, présentant une teneur en protéines comprise entre 15 et 22 %, une teneur en glucides comprise entre 5 et 9 % et une teneur en lipides comprise entre 1 et 4.5 %.

3. Gâteau cuit surgelé selon l'une ou l'autre des revendications 1 et 2, présentant une teneur en protéines comprise entre 15 et 21 %, une teneur en glucides comprise entre 5.5 et 9 %, et une teneur en lipides comprise entre 1.5 et 4.5 %.

4. Gâteau cuit surgelé selon l'une ou l'autre des revendications 1 à 3, **caractérisé par le fait que** sa teneur en eau est comprise entre 40 et 70 %.

5. Gâteau cuit surgelé selon l'une quelconque des revendications 1 à 4, **caractérisé par le fait qu'**il présente un indice chimique supérieur à 100.

6. Gâteau cuit surgelé selon l'une quelconque des revendications 1 à 5, **caractérisé par le fait qu'**il présente une valeur calorique totale située entre 120 et 200 Kcal pour 100 g, de préférence entre 120 et 180 Kcal pour 100 g et encore plus préférentiellement entre 120 et 170 Kcal pour 100 g.

7. Gâteau cuit surgelé selon l'une quelconque des revendications 1 à 6, **caractérisé par le fait qu'**il présente une teneur en farine de blé comprise entre 0.5 et 6 g, de préférence entre 1 et 6 g , et plus préférentiellement encore entre 1 et 5.5 g, pour 100 g de produit commercial.

8. Gâteau cuit surgelé selon l'une quelconque des revendications 1 à 7, **caractérisé par le fait qu'**il présente une teneur en fécule de pomme de terre comprise entre 0.25 et 4 g, de préférence entre 0.25 et 3.75 g, et plus préférentiellement encore entre 0.25 et 3.5 g, pour 100 g de produit commercial.

9. Gâteau cuit surgelé selon l'une quelconque des revendications 1 à 8, **caractérisé par le fait qu'**il comprend de 9 à 18 %, de préférence de 10 à 18 %, et plus préférentiellement encore de 10 à 17.5 % de protéines laitières, les pourcentages étant exprimés en poids par rapport au produit commercial.

10. Gâteau cuit surgelé selon l'une quelconque des revendications 1 à 9, **caractérisé par le fait qu'**il comprend un agent foisonnant ou moussant constitué par de la poudre d'oeuf entière ou du blanc d'oeuf, cet agent moussant étant compris en une quantité de 2 à 8 %, de préférence de 2.5 à 8 %, et plus préférentiellement encore de 3 à 8 %.

11. Gâteau cuit surgelé selon l'une quelconque des revendications 1 à 10, **caractérisé par le fait qu'**il contient un agent levant, en une quantité comprise entre 0.2 et 1.5 %, de préférence entre 0.25 et 1.25 %, et plus préférentiellement encore entre 0.25 et 1.12 %, ledit agent levant étant de préférence choisi parmi les poudres levantes traditionnelles comme les levures de boulangerie ou de bière, le bicarbonate de sodium ou le pyrophosphate de sodium.

12. Gâteau cuit surgelé selon l'une quelconque des revendications 1 à 11, **caractérisé par le fait qu'**il contient de 0.01 à 0.15 %, de préférence de 0.01 à 0.12 %, et plus préférentiellement encore de 0.02 à 0.12 g d'épaississant, ceci étant de préférence constitué par des gommes de xanthane, de caroube, de carraghénane.

13. Gâteau cuit surgelé selon l'une quelconque des revendications 1 à 12, présentant une teneur en protéines de 15 à 20 %, une teneur en glucides de 5 à 6 %, une teneur en lipides de 3 à 4 %, et une valeur calorique inférieure à 150 Kcal pour 100 g de produit commercial.

14. Procédé de préparation d'un gâteau cuit surgelé selon l'une quelconque des revendications 1 à 13, **caractérisé par le fait qu'**il comprend les étapes suivantes :
- sélection des ingrédients, pesée et dosage, lesdits ingrédients étant pour la plupart sous forme de poudres,
- mélange d'une partie des agents moussants et de tout ou partie de l'épaississant, puis hydratation,
- foisonnement du mélange ainsi obtenu,
- mélange et hydratation des autres ingrédients, qui se présentent pour la plupart sous forme de poudres, à raison notamment de 100 g de poudre pour 0.12 à 0.16 litre, afin d'obtenir une pâte,
- incorporation, à raison notamment de 100g du mélange foisonné pour 350 à 420 g de pâte,
- dosage individuel en coupelle,
- mise au repos de la pâte, pendant une durée comprise entre 15 et 60 minutes, de préférence entre 20 minutes et 50 minutes, et plus préférentiellement encore pendant une durée proche de 30 minutes,
- cuisson en vapeur saturée constante, afin d'obtenir une température d'environ 70 à 85°C, et de préférence d'environ 75°C, à coeur du produit,
- refroidissement,
- dorage infra rouge, pendant une durée de 30 secondes à 90 secondes, de préférence de l'ordre de 60 secondes,
- conditionnement et surgélation.

## Patentansprüche

1. Tiefgekühlter, gebackener Kuchen, welcher einen Proteingehalt (berechnet in N x 6,25) von 15 bis 25 %, einen Kohlehydratgehalt von 5 bis 10 %, einen Fettgehalt von 1 bis 5 % und einen Wassergehalt von 40 bis 72 % aufweist, wobei die prozentualen Gehalte als Gewicht bezogen auf das kommerzielle Produkt angegeben sind.

2. Tiefgekühlter, gebackener Kuchen gemäß Anspruch 1, welcher einen Proteingehalt von 15 bis 22 %, einen Kohlehydratgehalt von 5 bis 9 % und einen Fettgehalt von 1 bis 4,5 % aufweist.

3. Tiefgekühlter, gebackener Kuchen gemäß wenigstens einem der Ansprüche 1 und 2, welcher einen Proteingehalt von 15 bis 21 %, einen Kohlehydratgehalt von 5,5 bis 9 % und einen Fettgehalt von 1,5 bis 4,5 % aufweist.

4. Tiefgekühlter, gebackener Kuchen gemäß wenigstens einem der Ansprüche 1 bis 3, **dadurch gekennzeichnet, dass** er einen Wassergehalt von 40 bis 70 % aufweist.

5. Tiefgekühlter, gebackener Kuchen gemäß wenigstens einem der Ansprüche 1 bis 4, **dadurch gekennzeichnet, dass** er einen chemischen Index von über 100 aufweist.

6. Tiefgekühlter, gebackener Kuchen gemäß wenigstens einem der Ansprüche 1 bis 5, **dadurch gekennzeichnet, dass** er einen Gesamt-Kalorienwert zwischen 120 und 200 Kcal pro 100 g, bevorzugt zwischen 120 und 180 Kcal pro 100 g, noch bevorzugter zwischen 120 und 170 pro 100 g, aufweist.

7. Tiefgekühlter, gebackener Kuchen gemäß wenigstens einem der Ansprüche 1 bis 6, **dadurch gekennzeichnet, dass** er einen Gehalt an Weizenmehl von 0,5 bis 6 g, bevorzugt von 1 bis 6 g, noch bevorzugter von 1 bis 5,5 g, pro 100 g des kommerziellen Produkts aufweist.

8. Tiefgekühlter, gebackener Kuchen gemäß wenigstens einem der Ansprüche 1 bis 7, **dadurch gekennzeichnet, dass** er einen Gehalt an Kartoffelstärke von 0,25 bis 4 g, bevorzugt von 0,25 bis 3,75 g, noch bevorzugter von 0,25 bis 3,5 g, pro 100 g des kommerziellen Produkts aufweist:

9. Tiefgekühlter, gebackener Kuchen gemäß wenigstens einem der Ansprüche 1 bis 8, **dadurch gekennzeichnet, dass** er 9 bis 18 %, bevorzugt 10 bis 18 %, noch bevorzugter 10 bis 17,5 % Milchproteine aufweist, wobei die prozentualen Gehalte als Gewicht bezogen auf das kommerzielle Produkt angegeben sind.

10. Tiefgekühlter, gebackener Kuchen gemäß wenigstens einem der Ansprüche 1 bis 9, **dadurch gekennzeichnet, dass** er ein Quell- oder Schaummittel, bestehend aus Gesamteipulver oder Eiweißpulver, enthält, wobei das Schaummittel in einer Menge von 2 bis 8 %, bevorzugt von 2,5 bis 8 %, noch bevorzugter von 3 bis 8 %, enthalten ist.

11. Tiefgekühlter, gebackener Kuchen gemäß wenigstens einem der Ansprüche 1 bis 10, **dadurch gekennzeichnet, dass** er ein Treibmittel in einer Menge von 0,2 bis 1,5 %, bevorzugt von 0,25 bis 1,25 %, noch bevorzugter von 0,25 bis 1,12 %, enthält, wobei das Treibmittel bevorzugt aus den traditionellen Treibmitteln (-pulvern), wie beispielsweise den Bäckhefen oder Bierhefen, Natriumbicarbonat oder Natriumpyrophosphat, ausgewählt ist.

12. Tiefgekühlter, gebackener Kuchen gemäß wenigstens einem der Ansprüche 1 bis 11, **dadurch gekennzeichnet, dass** er 0,01 bis 0,15 %, bevorzugt 0,01 bis 0,12 %, noch bevorzugter 0,02 bis 0,12 %, Verdickungsmittel enthält, wobei es sich bevorzugt um Xanthangummis, Johannisbrot(mehl) und/oder Carrageenan handelt.

13. Tiefgekühlter, gebackener Kuchen gemäß wenigstens einem der Ansprüche 1 bis 12, welcher einen Proteingehalt von 15 bis 20 %, einen Kohlehydratgehalt von 5 bis 6 %, einen Fettgehalt von 3 bis 4 % und einen Kalorienwert von unter 150 Kcal pro 100 g des kommerziellen Produkts aufweist.

14. Verfahren zur Herstellung eines tiefgekühlten, gebackenen Kuchens gemäß wenigstens einem der Ansprüche 1 bis 13, **dadurch gekennzeichnet, dass** es folgende Schritte umfasst:
- Auswählen der Zutaten, Abwiegen und Dosieren, wobei die meisten Zutaten in Pulverform vorliegen,
- Mischen eines Teils der Schaummittel und des gesamten oder eines Teils des Verdickungsmittels, anschließende Hydratation,
- Quellen der so erhaltenen Mischung,
- Mischen und Hydratation der anderen Zutaten, die in der Mehrzahl in Pulverform vorliegen, in einem Verhältnis von insbesondere 100 g Pulver pro 0,12 bis 0, 16 Liter, zum Erhält eines Teigs,
- Einarbeiten der gequollenen Mischung in einem Verhältnis von insbesondere 100 g pro 350 bis 420 g Teig,
- Individuelles Dosieren in Schalen,
- Ruhen des Teigs für einen Zeitraum von 15 bis 60 Minuten, bevorzugt von 20 bis 50 Minuten, noch bevorzugter für eine Dauer von ungefähr 30 Minuten,
- Backen in konstantem, gesättigtem Dampf zum Erhalt einer Temperatur von etwa 70 bis 85°C, bevorzugt etwa 75 °C, im Innern des Produkts,
- Abkühlen,
- Infrarot-Behandlung ("Vergoldung") für einen Zeitraum von 30 bis 90 Sekunden, bevorzugt in der Größenordnung von 60 Sekunden,
- Verpacken und Tieffrieren.

## Claims

1. A deep-frozen baked cake, having a protein content (calculated in Nx6.25) of between 15 and 25%, a carbohydrate content of between 5 and 10%, a lipid content of between 1 and 5%, and a water content of 40 to 72%, these percentages being by weight with reference to the commercial product.

2. The deep-frozen baked cake as claimed in claim 1, having a protein content of between 15 and 22%, a carbohydrate content of between 5 and 9%, and a lipid content of between 1 and 4.5%.

3. The deep-frozen baked cake as claimed in either of claims 1 and 2, having a protein content of between 15 and 21%, a carbohydrate content of between 5.5 and 9%, and a lipid content of between 1.5 and 4.5%.

4. The deep-frozen baked cake as claimed in any one of claims 1 to 3, **characterized in that** its water content of between 40 and 70%.

5. The deep-frozen baked cake as claimed in any one of claims 1 to 4, **characterized in that** it has a chemical score greater than 100.

6. The deep-frozen baked cake as claimed in any one of claims 1 to 5, **characterized in that** it has a total calorific value between 120 and 200 Kcal per 100 g, preferably between 120 and 180 Kcal per 100 g, and still more preferably between 120 and 170 Kcal per 100 g.

7. The deep-frozen baked cake as claimed in any one of claims 1 to 6, **characterized in that** it has a wheat flour content of between 0.5 and 6 g, preferably between 1 and 6 g, and still more preferably between 1 and 5.5 g, per 100 g of commercial product.

8. The deep-frozen baked cake as claimed in any one of claims 1 to 7, **characterized in that** it has a potato starch content of between 0.25 and 4 g, preferably between 0.25 and 3.75 g, and still more preferably between 0.25 and 3.5 g, per 100 g of commercial product.

9. The deep-frozen baked cake as claimed in any one of claims 1 to 8, **characterized in that** it comprises from 9 to 18%, preferably from 10 to 18%, and still more preferably from 10 to 17.5% of milk proteins, these percentages being by weight with reference to the commercial product.

10. The deep-frozen baked cake as claimed in any one of claims 1 to 9, **characterized in that** it comprises an overrun-producing or foaming agent consisting of whole egg or egg white powder, this foaming agent being in a quantity of 2 to 8%, preferably 2.5 to 8%, and still more preferably 3 to 8%.

11. The deep-frozen baked cake as claimed in any one of claims 1 to 10, **characterized in that** it contains a leavening agent, in a quantity between 0.2 and 1.5%, preferably between 0.25 and 1.25%, and still more preferably between 0.25 and 1.12%, said leavening agent being preferably selected from the group consisting of traditional leavening agents such as baker's or brewery yeast, sodium bicarbonate or sodium pyrophosphate.

12. The deep-frozen baked cake as claimed in any one of claims 1 to 11, **characterized in that** it contains from 0.01 to 0.15%, preferably from 0.01 to 0.12%, and still more preferably from 0.02 to 0.12 g of thickener, preferably consisting of xanthan, carob or carragheenan gums.

13. The deep-frozen baked cake as claimed in any one of claims 1 to 12, having a protein content of 15 to 20%, a carbohydrate content of 5 to 6%, a lipid content of 3 to 4%, and a calorific value of less than 150 Kcal per 100 g of commercial product.

14. A method for preparing a deep-frozen baked cake as claimed in any one of claims 1 to 13, **characterized in that** it comprises the following steps:
- selecting the ingredients, weighing and measuring out, said ingredients being for the majority in powder form,
- mixing a portion of the overrun-producing or foaming agents, and a portion or the whole of the thickener, and then hydrating,
- giving the mixture thus obtained a degree of over-run,
- mixing and hydrating the other ingredients, which are, for the majority, provided in powdered form, particularly at the rate of 100 g of powder per 0.12 to 0.16 liter, in order to obtain a pastry,
- incorporation, particularly at the rate of 100 g of mixture having a degree of overrun per 350 to 420 g of pastry,
- individual measuring out into dishes,
- allowing the pastry to rest, for a period of between 15 minutes and 60 minutes, preferably between 20 minutes and 50 minutes, and still more preferably for a period of close to 30 minutes,
- baking in constant saturated steam in order to obtain a temperature of about 70 to 85°C, and preferably of about 75°C, in the center of the product,
- cooling,
- infrared browning for a period of 30 seconds to 90 seconds, preferably of the order of 60 seconds,
- packaging and deep-freezing.
